# EUROPÄISCHE PATENTSCHRIFT

(11) **EP 1 804 483 B1**
(45) Veröffentlichungstag und Bekanntmachung des Hinweises auf die Patenterteilung: **05.08.2009**
(21) Anmeldenummer: 05113052.4
(22) Anmeldetag: 29.12.2005
(51) Int. Cl.: H04N 1/10

(54) **Antriebsvorrichtung für eine optische Abtasteinrichtung**
Driving device for optical scanner
Dispositif d'entraînement pour un dispositif de balayage optique

(43) Veröffentlichungstag der Anmeldung: 04.07.2007
(73) Patentinhaber: Agfa-Gevaert HealthCare GmbH, 50670 Köln (DE)
(72) Erfinder: Stahl, Werner, 85551 Kirchheim (DE); Hölzl, Johannes, 85630 Grasbrunn (DE)

(56) Entgegenhaltungen:
- EP-A- 0 599 100
- US-A- 4 372 222
- US-A- 4 597 303
- US-B1- 6 407 380

## Beschreibung

Die vorliegende Erfindung betrifft eine Antriebsvorrichtung für eine optische Abtasteinrichtung.

Ein Beispiel für eine solche Abtasteinrichtung ist insbesondere aus dem Bereich der Computer-Radiografie (CR) bekannt. Dabei wird von einem Objekt, beispielsweise einem Patienten oder einem Körperteil des Patienten, mittels Röntgenbestrahlung ein Bild erzeugt, das in einer Speicherleuchtstoffschicht als latentes Bild abgespeichert wird. Ein solches Röntgenbild enthält somit Röntgeninformationen über das Objekt. Zum Auslesen, d. h. zum Abtasten, der in der Speicherleuchtstoffschicht abgespeicherten Röntgeninformationen wird die Speicherleuchtstoffschicht mittels einer Anregungsstrahlung angeregt. Die Speicherleuchtstoffschicht emittiert aufgrund dieser Anregung Licht, das eine Intensität entsprechend der in der Speicherleuchtstoffschicht abgespeicherten Röntgeninformationen aufweist. Das von der Speicherleuchtstoffschicht ausgesandte Licht wird von der Abtasteinrichtung erfasst und in elektrische Signale gewandelt, die ein Abbild der Röntgeninformationen enthalten. Die elektrischen Signale werden weiterverarbeitet und die in der Speicherleuchtstoffschicht abgespeicherten Röntgeninformationen anschließend Röntgeninformationen anschließend sichtbar gemacht. Die Röntgeninformationen können beispielsweise direkt auf einem Monitor dargestellt oder mittels eines speziell für Röntgenbilder verwendbaren Druckers auf einen fotografischen Röntgenfilm geschrieben werden.

Zum Abtasten wird zwischen der Speicherleuchtstoffschicht und der Abtasteinrichtung eine gleichförmige Relativbewegung ausgeführt. Dabei bestehen sehr hohe Anforderungen an den Gleichlauf der Relativbewegung, um Verzerrungen im Röntgenbild zu vermeiden.

Eine Antriebsvorrichtung für eine optische Abtasteinrichtung ist aus der EP 1 263 207 A1 bekannt. Diese Antriebsvorrichtung enthält ein Seil, das über ein Reibradgetriebe mit einem Motor verbunden ist. Das Seil dient dazu, die rotatorische Bewegung der Ausgangswelle des Motors in eine lineare Bewegung umzusetzen.

Dokument EP-0599100-A1 offenbart eine Feinpositioniervorrichtung mit einer bewegbaren Plattform; einer Antriebsspindel mit einer parallel zur Bewegungsrichtung der Plattform verlaufenden Längsachse; einem auf der Antriebsspindel sitzenden Läufer; mindestens einer linearen Führungsschiene zum Unterstützen einer Seite der Plattform, wobei die Achse der Führungsschiene parallel zur Bewegüngsrichtung der Plattform verläuft; und einem an der Plattform befestigten Antriebselement; **dadurch gekennzeichnet, daß** das Antriebselement zwei gegenüberliegend angeordnete Kontaktflächen aufweist, die in einem vorbestimmten Abstand voneinander angeordnet sind; und ein Mitnehmer vorgesehen ist, de am Läufer befestigt ist und ein Antriebsteil aufweist, das zwischen die Kontaktflächen einbringbar ist und die Plattform entlang der Führungsschiene bewegt, wobei das Antriebsteil und die Kontaktflächen so ausgebildet sind, daß zwischen ihnen im wesentlichen ein Punktkontakt erfolgt, so daß der Mitnehmer zwischen den Kontaktflächen gleiten kann und sich entweder vertikal oder horizontal bewegt.

Es ist die Aufgabe der vorliegenden Erfindung, eine Antriebsvorrichtung für eine optische Abtasteinrichtung anzugeben, mit der ein besonders guter Gleichlauf gewährleistet werden kann.

Diese Aufgabe wird gemäß der technischen Lehre des Anspruchs 1 gelöst. Die erfindungsgemäße Antriebsvorrichtung enthält eine Gewindespindel, auf der eine Spindelmutter aufgefädelt ist. Des Weiteren ist ein Kopplungsmittel zum Ankoppeln der Spindelmutter an die Abtasteinrichtung vorhanden, wobei das Kopplungsmittel so ausgestaltet ist, dass es eine kardanische Kopplung nach Art eines Kardangelenks gewährleistet. Ein solches Kardangelenk wird auch als Kreuzgelenk bezeichnet. Das Kopplungsmittel stellt wenigstens zwei kardanische Drehachsen zur Verfügung, die um 90° gegeneinander verdreht sind.

Das Kardangelenk erlaubt eine Biegung bei gleichzeitiger Kraftübertragung. Unebenheiten und Toleranzen am Gewinde der Gewindespindel und/oder am Gewinde der Spindelmutter, die zu einem Torkeln der Spindelmutter beim Vorschub, und damit zu Gleichlaufschwankungen des Antriebs, führen können, werden vorteilhafterweise nicht auf die Abtasteinrichtung übertragen. Die Spindelmutter kann sich an den Verlauf der Gewindespindel anpassen, ohne dass dadurch die Gleichförmigkeit der Vorschubbewegung für die Abtasteinrichtung beeinflusst wird. Dadurch kann eine besonders gute Konstanz des Drehmomentes zwischen Gewindespindel und Spindelmutter gewährleistet werden. Dies führt zu einem besonders guten Gleichlauf der linearen Vorschubbewegung.

In einer vorteilhaften Ausgestaltung der Erfindung weist das Kopplungsmittel ein insbesondere scheibenförmiges Verbindungsstück zum Verbinden mit der Abtasteinrichtung und wenigstens eine scheibenförmige Gelenkplatte auf. Diese wenigstens eine scheibenförmige Gelenkplatte ist zwischen der Spindelmutter und dem Verbindungsstück angeordnet. Dabei sind die Spindelmutter, die wenigstens eine Gelenkplatte und das Verbindungsstück vorzugsweise parallel zueinander angeordnet.

Vorzugsweise sind sowohl zwischen der Spindelmutter und der wenigstens einen Gelenkplatte als auch zwischen der wenigstens einen Gelenkplatte und dem Verbindungsstück zwei sich diametral gegenüber liegende Lager vorhanden, die kardanische Drehachsen bilden. Eine der Drehachsen verläuft somit zwischen der Spindelmutter und der wenigstens einen Gelenkplatte und eine andere der Drehachsen zwischen der wenigstens einen Gelenkplatte und dem Verbindungsstück. Die Drehachsen verlaufen zudem parallel zu der Spindelmutter, der wenigstens einen Gelenkplatte und des Verbindungsstücks. Die benachbarten Drehachsen sind um 90° gegeneinander verdreht. Die so angeordneten Lager, durch die sich die Lage der kardanischen Drehachsen ergibt, gewährleisten auf besonders einfache Weise die kardanische Anbindung.

In einer weiteren vorteilhaften Ausgestaltung sind in der der wenigstens einen Gelenkplatte zugewandten Oberfläche der Spindelmutter und in der der Spindelmutter zugewandten Oberfläche der wenigstens einen Gelenkplatte jeweils zwei sich diametral gegenüber liegende Vertiefungen vorhanden. Dabei liegen die Vertiefungen in der Oberfläche der Spindelmutter denjenigen in der Oberfläche der wenigstens einen Gelenkplatte gegenüber. Zwischen den sich gegenüber liegenden Vertiefungen der Spindelmutter und der wenigstens einen liegenden Vertiefungen der Spindelmutter und der wenigstens einen Gelenkplatte sind Kugeln angeordnet. Ferner sind in der der wenigstens einen Gelenkplatte zugewandten Oberfläche des Verbindungsstücks und in der dem Verbindungsstück zugewandten Oberfläche der wenigstens einen Gelenkplatte ebenfalls jeweils zwei sich diametral gegenüber liegende Vertiefungen vorhanden. Die Vertiefungen in der Oberfläche des Verbindungsstücks liegen denjenigen in der Oberfläche der wenigstens einen Gelenkplatte gegenüber. Dabei sind zwischen den sich gegenüber liegenden Vertiefungen des Verbindungsstücks und der wenigstens einen Gelenkplatte Kugeln angeordnet. Dabei greifen die Kugeln in die Vertiefungen ein. Durch die Kugeln und die Vertiefungen werden spielfreie Lager für die kardanischen Drehachsen gebildet. Die Spielfreiheit der Lager bleibt auch bei Verschleiß der Kugeln und der Vertiefungen erhalten. Zwischen Kugeloberflächen und Vertiefungen kann ein Gleitmittel eingefügt werden, mit dem ein möglichst reibungsfreies Drehen der Kugeln ermöglicht wird.

In einer besonders bevorzugten Ausgestaltung der Erfindung ist eine der vier Vertiefungen zweier gegenüber liegender Oberflächen als längliche Vertiefung ausgestaltet. Die längliche Vertiefung stellt eine Art Langloch dar. Dadurch ist ein Toleranzausgleich gegeben, da sich zwei gegenüber liegende Vertiefungspaare nicht ganz exakt deckungsgleich realisieren lassen.

Vorzugsweise sind die Spindelmutter und das Verbindungsstück durch ein Verbindungsmittel miteinander verbunden, das so ausgestaltet und angeordnet ist, dass es das gesamte Kopplungsmittel zusammen hält. Dadurch kann ein stabiler Zusammenhalt der einzelnen Komponenten des Kopplungsmittels einfachheitshalber gewährleistet werden. Das Verbindungsmittel weist besonders bevorzugt wenigstens eine Feder, insbesondere eine Zugfeder, auf. Durch die Zugfeder werden die Spindelmutter und das Verbindungsstück aufeinander gezogen. Vorteilhafterweise sind mehrere Federn vorhanden, die sich entlang der Umfangsoberfläche des Kopplungsmittels insbesondere gleichmäßig verteilen. Dadurch ist eine besonders gute Stabilität der Anordnung gewährleistet.

In einer weiteren, besonders bevorzugten Weiterbildung der Erfindung ist das Kopplungsmittel so ausgestaltet, dass es eine kardanische Kopplung nach Art eines kardanischen Doppelgelenks gewährleistet. Bei diesem Doppelgelenk sind zwei Kardangelenke hintereinander angeordnet und miteinander kardanisch verbunden. Das kardanische Doppelgelenk weist daher insgesamt vier kardanische Drehachsen auf. Ungleichförmigkeiten des einen Gelenkes können vorteilhafterweise durch das andere Gelenk aufgehoben werden. Das Doppelgelenk gewährleistet eine fast vollkommen gleichförmige Bewegungsübertragung von der Spindelmutter auf die Abtasteinrichtung. Der wirksame Verbindungspunkt, d. h. der Auflagepunkt, von Spindelmutter und Gewindespindel liegt bei der Vorschubbewegung immer in oder zumindest in der Nähe der Spindelachse. Dadurch kann ein praktisch unvermeidliches Taumeln oder Torkeln der Spindelmutter gestattet werden, ohne dass sich dieses wesentlich auf die Vorschubbewegung der Abtasteinrichtung überträgt. Insbesondere werden Höhenschläge, d. h. Schwankungen in Bewegungsrichtung der Spindelmutter, minimiert.

In einer bevorzugten Variante der Erfindung sind drei parallele Gelenkplatten vorhanden, die einander benachbart und zwischen der Spindelmutter und dem Verbindungsstück angeordnet sind. Durch diese drei Gelenkplatten und das Verbindungsstück ist das kardanische Doppelgelenk besonders effizient realisierbar. Zwischen den einzelnen Gelenkplatten sind kardanische Drehachsen ausgebildet. Das so ausgestaltete kardanische Doppelgelenk weist somit vier Drehachsen auf, wobei benachbarte Drehachsen jeweils um 90° gegeneinander verdreht sind. Die kardanischen Drehachsen sind insbesondere mittels Lager ausgeführt, die vorteilhafterweise, wie oben beschrieben, durch Vertiefungspaare in den Gelenkplatten und in diese Vertiefungspaare eingelassene Kugeln realisiert sein können.

In einer besonders bevorzugten Ausgestaltung der Erfindung ist die Abtasteinrichtung eine Einrichtung zum Auslesen von in einer Speicherleuchtstoffschicht abgespeicherten Röntgeninformationen. Beim Einsatz der erfindungsgemäßen Antriebsvorrichtung in einer solchen Abtasteinrichtung ist ein besonders exaktes Auslesen der Röntgeninformationen gegeben, da ein äußerst gleichmäßiger Vorschub beim Auslesen realisiert werden kann. Vorteilhafterweise ist das Verbindungsstück des Kopplungsmittels zum Verbinden mit einer Auflage zum Auflegen der Speicherleuchtstoffschicht ausgestaltet. Dadurch wird zum Auslesen der Röntgeninformation die Auflage bewegt und damit die auf der Auflage aufliegende Speicherleuchtstoffschicht an einer ortsfest angeordneten Bestrahlungseinrichtung und einer Detektionseinrichtung vorbei geführt.

Weitere Vorteile der Erfindung ergeben sich aus der folgenden Beschreibung von bevorzugten Anwendungs- und Ausführungsbeispielen, wobei Bezug auf die beigefügten Zeichnungen genommen wird.

Es zeigen:
- Fig. 1: eine schematische Darstellung eines Anwendungsbeispiels einer erfindungsgemäßen Antriebsvorrichtung in einer Ausleseeinrichtung zum Auslesen von Röntgeninformationen aus einer Speicherleuchtstoffsch icht,
- Fig. 2A: eine Ansicht auf die Oberseite eines Ausführungsbeispiels einer erfindungsgemäßen Antriebsvorrichtung zum Antreiben einer Auflage für eine Speicherleuchtstoffplatte,
- Fig. 2B: eine Ansicht auf die Unterseite der Antriebsvorrichtung nach Fig. 2A,
- Fig. 3: ein Ausführungsbeispiel eines Kopplungsmittels der Antriebsvorrichtung,
- Fig. 4A: eine Ansicht der einzelnen Komponenten des Kopplungsmittels nach Fig. 3 aus einer Perspektive von unten und
- Fig. 4B: die Ansicht der einzelnen Komponenten des Kopplungsmittels nach Fig. 3 aus einer Perspektive von oben.

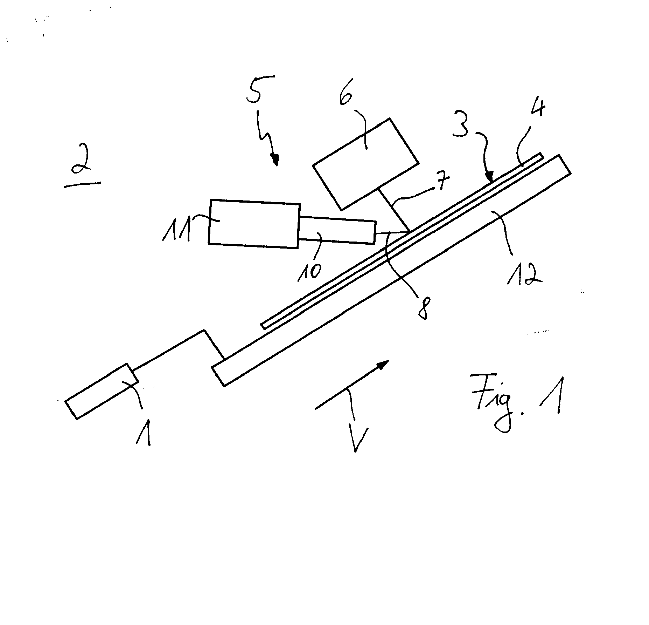

Fig. 1 zeigt eine schematische Darstellung eines Anwendungsbeispiels einer erfindungsgemäßen Antriebsvorrichtung 1 in einer Ausleseeinrichtung 2 zum Auslesen von Röntgeninformationen aus einer Speicherleuchtstoffschicht 3, die Teil einer Speicherleuchtstoffplatte 4 ist. Die Röntgeninformationen wurden in der Speicherleuchtstoffschicht 3 durch Bestrahlen mit Röntgenstrahlung abgespeichert. Zum Auslesen der abgespeicherten Röntgeninformationen enthält die Auslesevorrichtung 2 eine optische Abtasteinrichtung 5. Diese Abtasteinrichtung 5 weist eine Bestrahlungseinrichtung 6 auf, die zum Bestrahlen der Speicherleuchtstoffschicht 3 mit einer Anregungsstrahlung 7 dient. Die Bestrahlungseinrichtung 6 ist vorteilhafterweise so ausgestaltet, dass das Bestrahlen der Speicherleuchtstoffschicht 3 mit der Anregungsstrahlung 7 zeilenweise erfolgt. Als Bestrahlungseinrichtung 6 wird hier eine sogenannte "Flying-Spot" Bestrahlungseinrichtung verwendet, bei der ein von einem Laser ausgegebener Laserstrahl auf einen drehbar gelagerten Polygonspiegel gerichtet ist. Der Polygonspiegel rotiert, so dass der Laserstrahl über eine Zeile der Speicherleuchtstoffschicht 3 geführt wird. Dabei werden nacheinander einzelne Punkte der Zeile angeregt. Alternativ kann als Bestrahlungseinrichtung 6 beispielsweise auch eine Laserdiodenzeile eingesetzt werden, die eine Vielzahl von nebeneinander angeordneten Laserdioden enthält. Mit dieser Laserdiodenzeile wird eine Zeile der Speicherleuchtstoffschicht 3 gleichzeitig bestrahlt und angeregt.

Aufgrund des Anregens der Speicherleuchtstoffschicht 3 mittels der Anregungsstrahlung 7 emittiert diese eine Emissionsstrahlung 8, deren Intensität von den in der Speicherleuchtstoffschicht 3 abgespeicherten Röntgeninformationen abhängt. Zum Erfassen der emittierten Emissionsstrahlung 8 enthält die Abtasteinrichtung 5 eine Detektionseinrichtung. Diese enthält im vorliegenden Ausführungsbeispiel einen Lichtleiter 10 mit einem angeschlossenen Photomultiplier 11. Der Lichtleiter 10 sammelt ausgegebene Emissionsstrahlung 8 auf und leitet sie an den Photomultiplier 11 weiter. Alternativ kann die Detektionseinrichtung 10, 11 beispielsweise einen Zeilendetektor aufweisen, der eine sogenannte "chargecoupled-device" (CCD)-Zeile enthalten kann. Die CCD-Zeile weist eine Vielzahl von parallel in einer Linie nebeneinander angeordneten Fotodetektoren auf. Mittels der Detektionseinrichtung 10, 11 kann eine fotoelektrische Wandlung der empfangenen Emissionsstrahlung durchgeführt werden. Zwischen der Bestrahlungseinrichtung 6 und der Detektionseinrichtung 10, 11 besteht eine feste Verbindung, so dass die Abbildung der in der Speicherleuchtstoffschicht 3 gespeicherten Röntgeninformationen, d. h. die Anregung der Speicherleuchtstoffschicht 3 und der Empfang der aufgrund der Anregung emittierten Strahlung 8, genau aufeinander abgestimmt sind und auch während des eigentlichen Auslesevorgangs immer eine exakte Zuordnung gewährleistet ist.

Die Abtasteinrichtung 5 weist ferner eine Auflage 12 auf, auf der die Speicherleuchtstoffplatte 4 zum Auslesen aufliegt. Die Auflage 12 ist insbesondere tischförmig ausgestaltet. Im vorliegenden Ausführungsbeispiel sind sowohl die Bestrahlungseinrichtung 6 als auch die Detektionseinrichtung 10, 11 auf der gleichen Seite der Auflage 12 angeordnet. Dabei liegt die Speicherleuchtstoffplatte 4 so auf der Auflage 12, dass die Speicherleuchtstoffschicht 3 der Bestrahlungseinrichtung 6 und der Detektionseinrichtung 10, 11 zugewandt ist. Eine Trägerschicht der Speicherleuchtstoffplatte 4 liegt auf der Auflage 12 auf und ist eine reflektierende Trägerschicht. Die Speicherleuchtstoffschicht 3 ist auf der Trägerschicht aufgebracht. Es ist ebenso möglich, die Bestrahlungseinrichtung 6 auf der einen Seite der Auflage 12 und die Detektionseinrichtung 10, 11 auf der anderen Seite der Auflage 12 anzuordnen. In diesem Fall ist die Trägerschicht als transparente Trägerschicht ausgestaltet.

Über die erfindungsgemäße Antriebsvorrichtung 1 ist die Auflage 12 zum Auslesen der in der Speicherleuchtstoffschicht 3 abgespeicherten Röntgeninformationen in eine Verschiebungsrichtung V linear bewegbar. Dadurch kann ein Vorschub erzeugt werden, um die gesamte Speicherleuchtstoffschicht 3 mittels des zeilenweisen Anregens und Detektierens auszulesen. Die Bestrahlungseinrichtung 6 und die Detektionseinrichtung 10, 11 sind dabei fest in der Auslesevorrichtung 4 montiert. Alternativ kann die Auflage 12 fest in der Auslesevorrichtung 2 montiert sein. In diesem Fall werden die Bestrahlungseinrichtung 6 und die Detektionseinrichtung 10, 11 mittels des Antriebsvorrichtung 1 in die Verschiebungsrichtung V an der Speicherleuchtstoffschicht 3 vorbei bewegt.

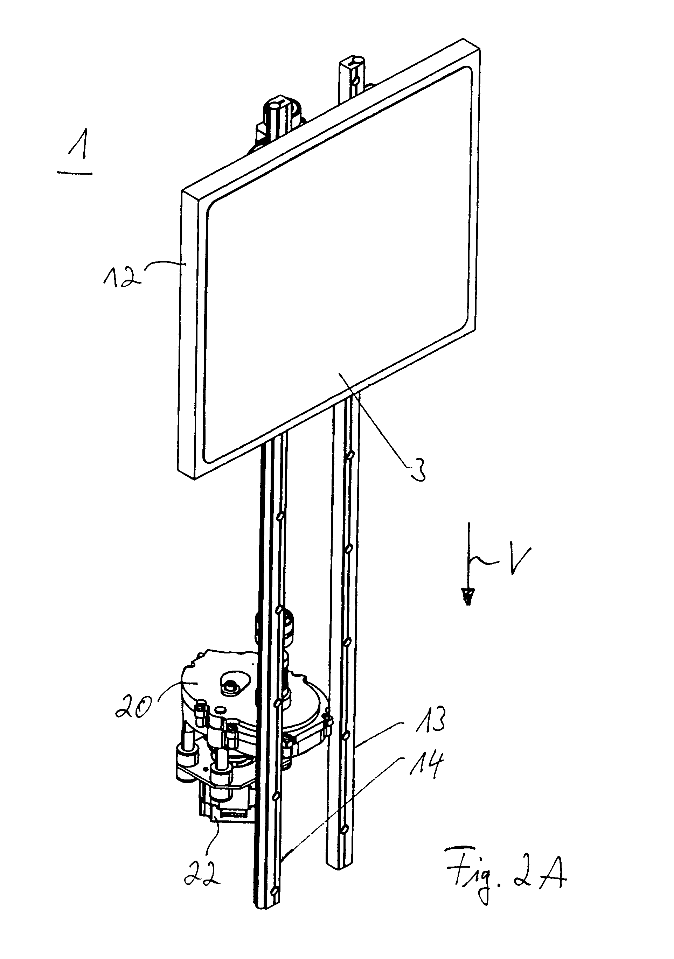

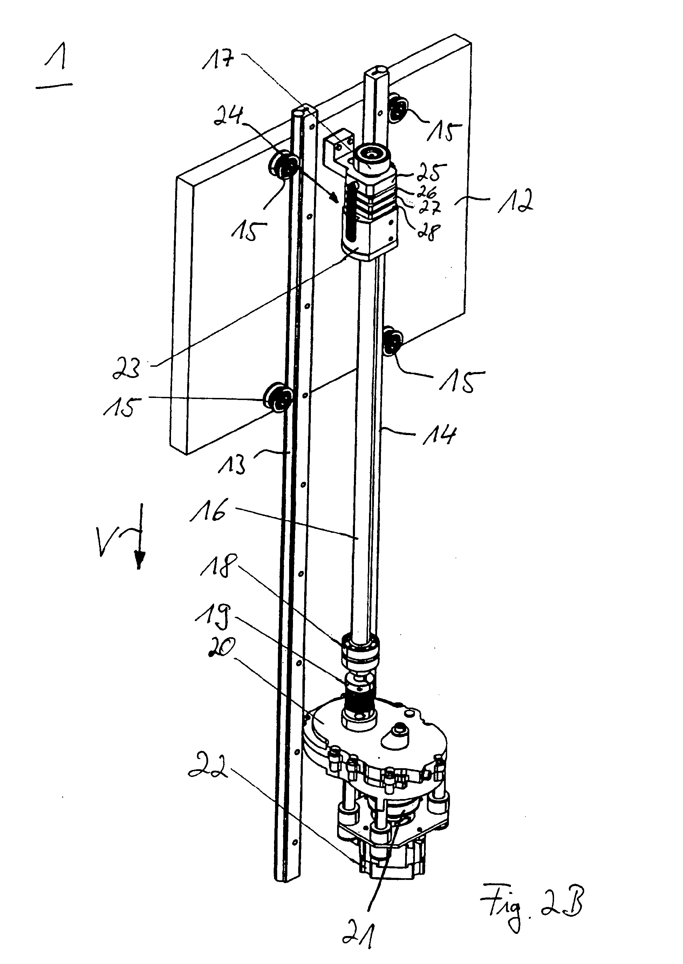

Zum verzerrungsfreien Auslesen der Röntgeninformationen muss die Antriebsvorrichtung 1 einen extrem genauen Gleichlauf des Vorschubs der Auflage 12 gewährleisten. Fig. 2A zeigt eine Ansicht der Oberseite eines Ausführungsbeispiels der erfindungsgemäßen Antriebsvorrichtung 1 zum Antreiben der Auflage 12 und Fig. 2B eine Ansicht der Unterseite der Antriebsvorrichtung 1. Die Antriebsvorrichtung 1 enthält zwei Führungsschienen 13 und 14, auf denen die Auflage 12 zur Lagerung und Führung aufliegt. An der Unterseite der Auflage 12 sind vier Führungsrollen 15 befestigt, die seitlich in die Führungsschienen 13, 14 eingreifen. Die lineare Vorschubbewegung der Auflage 12 ist mittels eines Gewindespindelantriebs realisiert. Dazu ist eine Gewindespindel 16 vorhanden, die unterhalb der Auflage und parallel zu den Führungsschienen 13, 14 verläuft. Die Gewindespindel 16 ist an ihren beiden Enden in Spindellagern 17 und 18 gelagert. An einem ihrer Enden ist die Gewindespindel 16 über eine Kupplung 19, ein Reibradgetriebe 20, eine Schwungscheibe und eine elastische Kupplung 21 an einen Schrittmotor 22 angeschlossen. Der Schrittmotor 22 hat einen relativ schlechten Gleichlauf, aber die Vorteile, dass er preiswert ist und die mittlere Drehzahl präzise steuerbar ist. Der schlechte Gleichlauf des Schrittmotors 22 wird durch die elastisch an den Motor 22 gekoppelte Schwungscheibe geglättet. Das Reibradgetriebe 20 reduziert die zu hohe Drehzahl der Schwingscheibe auf eine erforderliche Drehzahl der Gewindespindel 16. Dabei wird der sehr gute Gleichlauf der Schwungscheibe nicht nennenswert verschlechtert. Das Reibradgetriebe 20 wird in der vorveröffentlichten Patentanmeldung EP 1 263 207 A1 näher beschrieben. Betreffend den Aufbau und die Funktionsweise des Reibradgetriebes 20 wird somit auf den Offenbarungsgehalt dieser Patentanmeldung verwiesen. Die Kupplung 19 zwischen Reibradgetriebe 20 und Gewindespindel 16 gleicht einen Achsversatz zwischen Reibradgetriebe 20 und dem Spindellager 18 aus. Die Kupplung 19 kann vorteilhafterweise besonders torsionssteif sein.

Die Gewindespindel 16 dient zum Umsetzen der Drehbewegung einer Welle des Reibradgetriebes 20 in eine Linearbewegung, mit der die Auflage 12 bewegt werden soll. Dazu ist auf die Gewindespindel 16 eine Spindelmutter 23 aufgefädelt. Die Spindelmutter 23 ist über ein Kopplungsmittel 24 mit der Auflage 12 der Abtasteinrichtung 5 verbunden. Das Kopplungsmittel 24 enthält dazu ein Verbindungsstück 25 mit dem es mit der Auflage 12 verbunden ist. Das Kopplungsmittel 24 enthält ferner drei Gelenkplatten 26, 27 und 28, die zwischen der Spindelmutter 23 und dem Verbindungsstück 25 angeordnet sind.

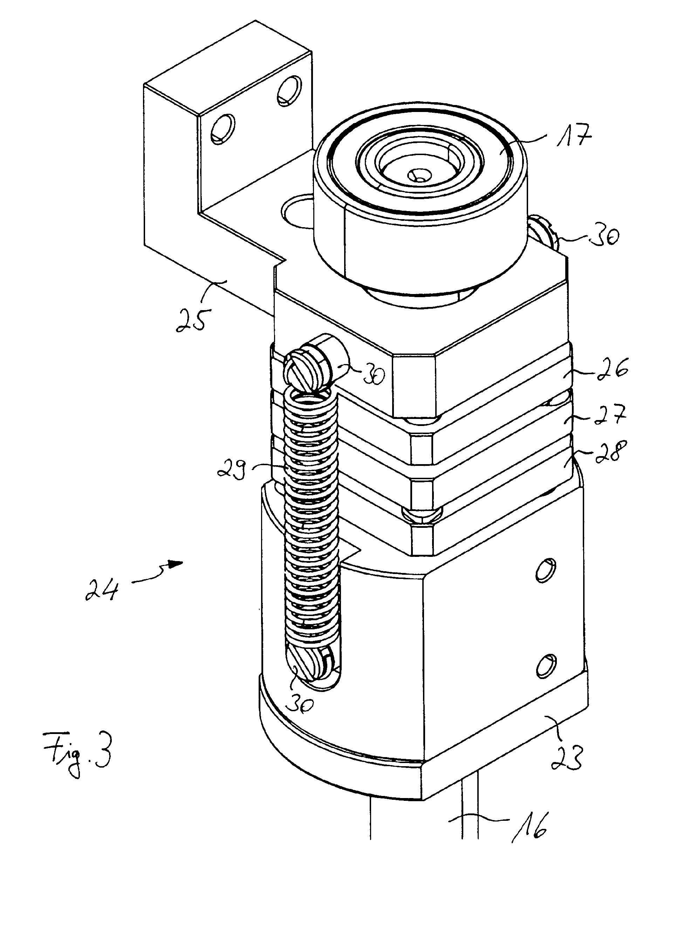

Ein Ausführungsbeispiel des Kopplungsmittels 24 ist in der Fig. 3 näher dargestellt. Das Koppelungsmittel 24 gewährleistet eine kardanische Kopplung zwischen der Spindelmutter 23 und der Auflage 12 nach Art eines Kardangelenks. In den vorliegenden Ausführungsbeispielen gewährleistet das Koppelungsmittel 24 eine kardanische Kopplung nach Art eines kardanischen Doppelgelenks. Dazu sind in dem Kopplungsmittel 24 vier kardanische Drehachsen zwischen der Spindelmutter 23 und der Auflage 12 realisiert, wobei benachbarte Drehachsen um 90° gegeneinander verdreht sind.

Das Kopplungsmittel 24 enthält das Verbindungsstück 25, das einen L-förmigen Anschluss aufweist, über den es mit der Unterseite der Auflage 12 verbunden ist. Die drei Gelenkplatten 26, 27 und 28 sind parallel zueinander angeordnet und scheibenförmig ausgestaltet. Die Gelenkplatten 26, 27, 28 haben die gleiche Form. Zwischen den einzelnen Gelenkplatten 26, 27, 28, zwischen der Gelenkplatte 28 und der Spindelmutter 23 und zwischen der Gelenkplatte 26 und dem Verbindungsstück 25 sind jeweils zwei sich diametral gegenüber liegende Lager vorhanden. Das Verbindungsstück 25 und die Spindelmutter 23 sind über zwei an entgegengesetzten Seiten angeordnete Zugfedern 29 miteinander gekoppelt. Dazu befinden sich sowohl an dem Verbindungsstück 25 als auch an der Spindelmutter 23 jeweils zwei nach außen stehende Aufhängungen 30, an denen die Zugfedern 29 befestigt sind. In der Fig. 3 ist nur eine der Federn 29 dargestellt. Die zweite der Federn 29 befindet sich auf der hier verdeckten, gegenüber liegenden Seite des Kopplungsmittels 24. Die Federn 29 dienen dazu die einzelnen Komponenten des Kopplungsmittels 24 zusammen zu halten. Statt der Federn 29 kann auch ein anderes Verbindungsmittel verwendet werden.

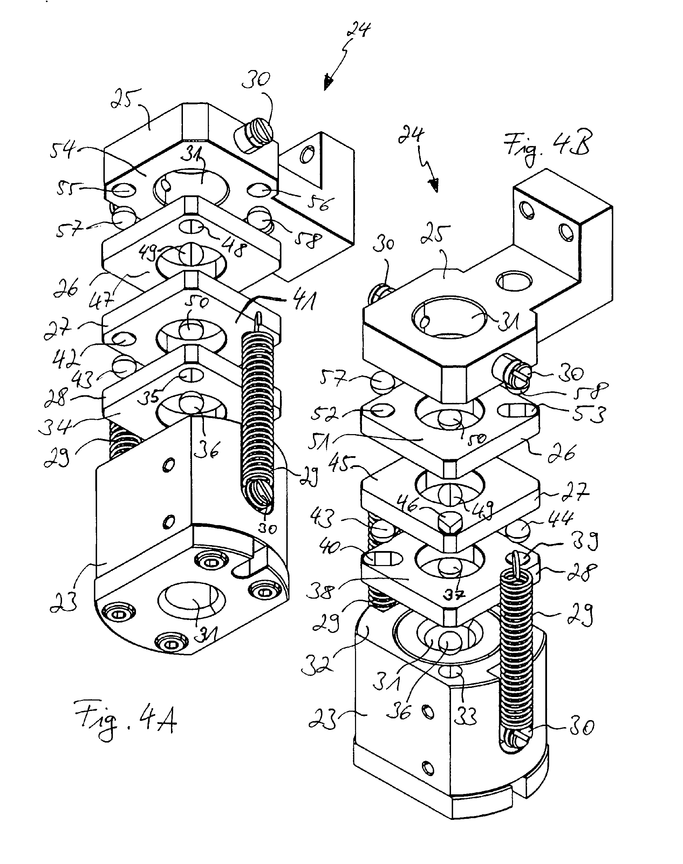

Fig. 4A zeigt eine auseinander gezogene Ansicht der einzelnen Komponenten des Kopplungsmittels 24 aus einer Perspektive von unten und Fig. 4B die auseinander gezogene Ansicht aus einer Perspektive von oben. Die Fig. 4A und 4B zeigen die Spindelmutter 23, die scheibenförmigen Gelenkplatten 26, 27, 28 und das Verbindungsstück 25, die jeweils eine zentrale Bohrung 31 für die Gewindespindel 16 aufweisen. Die Federn 29 sind hier nicht in den oberen Aufhängungen 30 eingehängt. Die zwischen den einzelnen Gelenkplatten 26, 27, 28, zwischen der Gelenkplatte 28 und der Spindelmutter 23 und zwischen der Gelenkplatte 26 und dem Verbindungsstück 25 vorhandenen, sich diametral gegenüber liegenden Lager sind hier durch Vertiefungen in den sich gegenüber liegenden Oberflächen der einzelnen Komponenten und durch in die Vertiefungen eingreifende Kugeln realisiert.

Die Spindelmutter 23 weist eine der Gelenkplatte 28 zugewandte, im wesentlichen flache Oberfläche 32 auf. In dieser Oberfläche 32 sind zwei sich diametral gegenüber liegende Vertiefungen vorhanden, von denen in den Fig. 4A, 4B nur eine, nämlich eine Vertiefung 33, zu sehen ist. Diesen beiden Vertiefungen in der Oberfläche 32 der Spindelmutter 23 sind in einer der Spindelmutter 23 zugewandten Oberfläche 34 der Gelenkplatte 28 ebenfalls zwei sich diametral gegenüber liegende Vertiefungen vorhanden. In den Fig. 4A, 4B ist eine dieser Vertiefungen, nämlich eine Vertiefung 35 dargestellt. Die Vertiefungen in den benachbarten Oberflächen 32, 34 der Spindelmutter 23 und der Gelenkplatte 28 sind einander gegenüber liegend angeordnet. Eine dieser Vertiefungen (nicht dargestellt) an der Oberfläche 32 ist länglich und hat die Form einer keilförmigen Senkung, während die anderen Vertiefungen der beiden Oberflächen 32, 34 ein vorzugsweise kegelförmiges Tiefenprofil aufweisen. Zwischen den sich gegenüber liegenden Vertiefungen der Spindelmutter 32 und der Gelenkplatte 28 sind Kugeln 36 und 37 angeordnet. Die Kugel 36 greift im zusammengesetzten Zustand des Kopplungsmittels 24 in die Vertiefungen 33 und 35 ein und die Kugel 37 in die beiden nicht dargestellten Vertiefungen der Oberflächen 32 und 34. Die paarweise Kombination zweier sich diametral gegenüber liegender Lager, die hier durch die in die Vertiefungen 33, 35 eingreifende Kugel 36 und die in die beiden nicht dargestellten Vertiefungen der Oberflächen 32, 34 eingreifende Kugel 37 realisiert sind, bildet eine kardanische Drehachse, um die die Spindelmutter 32 und die Gelenkplatte 28 drehbar sind. Das Prinzip dieser Anordnung der Lager und ihres Aufbaus setzt sich in dem Kopplungsmittel 24 weiter fort. Dabei sind zwei benachbarte kardanische Drehachsen jeweils um 90° gegeneinander verdreht. Die Lager sind entsprechend ausgebildet und angeordnet.

Die Gelenkplatte 28 weist eine weitere Oberfläche 38 auf, die der Gelenkplatte 27 zugewandt ist. In dieser Oberfläche 38 sind zwei sich diametral gegenüber liegende Vertiefungen 39 und 40 vorhanden. Diesen beiden Vertiefungen 39, 40 sind in einer der Gelenkplatte 28 zugewandten Oberfläche 41 der Gelenkplatte 27 ebenfalls zwei sich diametral gegenüber liegende Vertiefungen vorhanden. In den Fig. 4A, 4B ist eine dieser Vertiefungen, nämlich eine Vertiefung 42 dargestellt. Die Vertiefungen in den benachbarten Oberflächen 38 und 41 sind einander gegenüber liegend angeordnet. Die Vertiefung 40 ist länglich, nach Art einer keilförmigen Senkung, während die anderen Vertiefungen der beiden Oberflächen 38, 41 insbesondere kegelförmig ausgestaltet sind. Zwischen den sich gegenüber liegenden Vertiefungen der Gelenkplatten 27, 28 sind Kugeln 43 und 44 angeordnet. Die Kugel 43 greift im zusammengesetzten Zustand des Kopplungsmittels 24 in die Vertiefungen 40 und 42 ein und die Kugel 44 in die Vertiefung 39 und die nicht dargestellte Vertiefung der Oberfläche 41. Die Anordnungen der Vertiefungen in den Oberflächen 38, 41 und der Kugeln 43, 44 sind gegenüber den Anordnungen der Vertiefungen in den Oberflächen 32, 34 und der Kugeln 36, 37 um 90° verdreht.

Die Gelenkplatte 27 weist eine weitere Oberfläche 45 auf, die der Gelenkplatte 26 zugewandt ist. In dieser Oberfläche 45 sind zwei sich diametral gegenüber liegende Vertiefungen vorhanden, von denen in den Fig. 4A, 4B nur eine, nämlich eine Vertiefung 46, zu sehen ist. Diesen beiden Vertiefungen in der Oberfläche 45 sind in einer der Gelenkplatte 27 zugewandten Oberfläche 47 der Gelenkplatte 26 ebenfalls zwei sich diametral gegenüber liegende Vertiefungen vorhanden. In den Fig. 4A, 4B ist eine dieser Vertiefungen, nämlich eine Vertiefung 48 dargestellt. Die Vertiefungen in den benachbarten Oberflächen 45, 47 sind einander gegenüber liegend angeordnet. Die Vertiefung 46 der Oberfläche 45 ist länglich, nach Art einer keilförmigen Senkung, während die anderen Vertiefungen der beiden Oberflächen 45, 47 kegelförmig ausgestaltet sind. Zwischen den sich gegenüber liegenden Vertiefungen der Oberflächen 45, 47 sind Kugeln 49 und 50 angeordnet. Die Kugel 49 greift im zusammengesetzten Zustand des Kopplungsmittels 24 in die Vertiefungen 46 und 48 ein und die Kugel 50 in die beiden nicht dargestellten Vertiefungen der Oberflächen 45 und 47. Die Anordnungen der Vertiefungen in den Oberflächen 45, 47 und der Kugeln 49, 50 sind gegenüber den Anordnungen der Vertiefungen in den Oberflächen 38, 41 und der Kugeln 43, 44 um 90° verdreht.

Die Gelenkplatte 26 weist eine weitere Oberfläche 51 auf, die dem Verbindungsstück 25 zugewandt ist. In dieser Oberfläche 51 sind zwei sich diametral gegenüber liegende Vertiefungen 52 und 53 vorhanden. Diesen beiden Vertiefungen 52, 53 sind in einer der Gelenkplatte 26 zugewandten Oberfläche 54 des Verbindungsstücks 25 ebenfalls zwei sich diametral gegenüber liegende Vertiefungen 55 und 56 vorhanden. Die Vertiefungen in den benachbarten Oberflächen 51 und 54 sind einander gegenüber liegend angeordnet. Die Vertiefung 53 ist länglich, nach Art einer kegelförmigen Senkung, während die anderen Vertiefungen der beiden Oberflächen 51, 54 kegelförmig ausgestaltet sind. Zwischen den sich gegenüber liegenden Vertiefungen der Gelenkplatte 26 und des Verbindungsstücks 25 sind Kugeln 57 und 58 angeordnet. Die Kugel 57 greift im zusammengesetzten Zustand des Kopplungsmittels 24 in die Vertiefungen 52 und 55 ein und die Kugel 58 in die Vertiefungen 53 und 56. Die Anordnungen der Vertiefungen in den Oberflächen 51, 54 und der Kugeln 57, 58 sind gegenüber den Anordnungen der Vertiefungen in den Oberflächen 45, 47 und der Kugeln 49, 50 um 90° verdreht.

Zwischen den verschiedenen Kugeln und Vertiefungen kann ein Gleitmittel eingefügt werden, mit dem ein möglichst reibungsfreies Drehen der Kugeln ermöglicht wird.

Die erfindungsgemäße kardanische Kopplung zwischen der Spindelmutter 23 und der Auflage 12 mittels der Gelenkplatten 26, 27, 28 und dem Verbindungsstück 25 ist vorteilhafterweise beliebig steif ausführbar. Dies bedeutet, dass die Gelenkplatten 26, 27, 28 und das Verbindungsstück 25 beliebig, im Hinblick auf Dicke und Material, etc., dimensioniert werden können. Ein Verbiegen der Gelenkplatten 26, 27, 28 und des Verbindungsstücks 25 kann somit auf einfache Weise vermieden werden. Dadurch kann ein besonders hohes Maß an Spielfreiheit gewährleistet werden. Aufgrund der Erfindung ist die Verdrehsicherung der Spindelmutter 23 vorteilhafterweise spielfrei.

## Patentansprüche

1. Antriebsvorrichtung (1) für eine optische Abtasteinrichtung (5) mit
- einer Gewindespindel (16), auf der eine Spindelmutter (23) aufgefädelt ist, und
- einem Kopplungsmittel (24) zum Ankoppeln der Spindelmutter (23) an die Abtasteinrichtung (5), wobei das Kopplungsmittel (24) eine kardanische Kopplung nach Art eines Kardangelenks gewährleistet.

2. Vorrichtung nach Anspruch 1, **dadurch gekennzeichnet, dass** das Kopplungsmittel (24) ein insbesondere scheibenförmiges Verbindungsstück (25) zum Verbinden mit der Abtasteinrichtung (5) und wenigstens eine scheibenförmige Gelenkplatte (26, 27, 28) aufweist, die zwischen der Spindelmutter (23) und dem Verbindungsstück (25) angeordnet ist, wobei die Spindelmutter (23), die wenigstens eine Gelenkplatte (26, 27, 28) und das Verbindungsstück (25) parallel zueinander angeordnet sind.

3. Vorrichtung nach Anspruch 2, **dadurch gekennzeichnet, dass** sowohl zwischen der Spindelmutter (23) und der wenigstens einen Gelenkplatte (26, 27, 28) als auch zwischen der wenigstens einen Gelenkplatte (26, 27, 28) und dem Verbindungsstück (25) zwei sich diametral gegenüber liegende Lager (36, 37, 43, 44, 49, 50, 57, 58) vorhanden sind, durch die kardanische Drehachsen gebildet sind.

4. Vorrichtung nach Anspruch 3, **dadurch gekennzeichnet, dass**
- in der der wenigstens einen Gelenkplatte (26, 27, 28) zugewandten Oberfläche (32) der Spindelmutter (23) und in der der Spindelmutter (23) zugewandten Oberfläche (34) der wenigstens einen Gelenkplatte (26, 27, 28) jeweils zwei sich diametral gegenüber liegende Vertiefungen (33, 35) vorhanden sind, wobei die Vertiefungen (33) in der Oberfläche (32) der Spindelmutter (23) denjenigen in der Oberfläche (35) der wenigstens einen Gelenkplatte (26, 27, 28) gegenüber liegen und zwischen den sich gegenüber liegenden Vertiefungen (33, 35) der Spindelmutter (23) und der wenigstens einen Gelenkplatte (26, 27, 28) Kugeln (36, 37) angeordnet sind, und
- in der der wenigstens einen Gelenkplatte (26, 27, 28) zugewandten Oberfläche (54) des Verbindungsstücks (25) und in der dem Verbindungsstück (25) zugewandten Oberfläche (51) der wenigstens einen Gelenkplatte (26, 27, 28) ebenfalls jeweils zwei sich diametral gegenüber liegende Vertiefungen (52, 53, 55, 56) vorhanden sind, wobei die Vertiefungen (55, 56) in der Oberfläche des Verbindungsstücks (25) denjenigen Vertiefungen (52, 53) in der Oberfläche (51) der wenigstens einen Gelenkplatte (26, 27, 28) gegenüber liegen und zwischen den sich gegenüber liegenden Vertiefungen (52, 53, 55, 56) des Verbindungsstücks (25) und der wenigstens einen Gelenkplatte (26, 27, 28) Kugeln (57, 58) angeordnet sind.

5. Vorrichtung nach Anspruch 4, **dadurch gekennzeichnet, dass** eine der vier Vertiefungen zweier gegenüber liegender Oberflächen (32, 34, 38, 41, 45, 47, 51, 54) als längliche Vertiefung (40, 46, 53) ausgestaltet ist.

6. Vorrichtung nach einem der Ansprüche 2 bis 5, **dadurch gekennzeichnet, dass** die Spindelmutter (23) und das Verbindungsstück (25) durch ein Verbindungsmittel (29) miteinander verbunden sind, das so ausgestaltet und angeordnet ist, dass es das Kopplungsmittel (24) zusammen hält.

7. Vorrichtung nach Anspruch 6, **dadurch gekennzeichnet, dass** das Verbindungsmittel (29) wenigstens eine Feder, insbesondere eine Zugfeder, aufweist.

8. Vorrichtung nach einem der vorhergehenden Ansprüche, **dadurch gekennzeichnet, dass** das Kopplungsmittel (24) so ausgestaltet ist, dass es eine kardanische Kopplung nach Art eines kardanischen Doppelgelenks gewährleistet.

9. Vorrichtung nach einem der Ansprüche 2 bis 7 und Anspruch 8, **dadurch gekennzeichnet, dass** drei parallele Gelenkplatten (26, 27, 28) vorhanden sind, die einander benachbart und zwischen der Spindelmutter (23) und dem Verbindungsstück (25) angeordnet sind.

10. Vorrichtung nach einem der vorhergehenden Ansprüche, **dadurch gekennzeichnet, dass** die Abtasteinrichtung (5) eine Einrichtung (2) zum Auslesen von in einer Speicherleuchtstoffschicht (3) abgespeicherten Röntgeninformationen ist.

11. Vorrichtung nach Anspruch 10, **dadurch gekennzeichnet, dass** das Verbindungsstück (25) zum Verbinden mit einer Auflage (12) zum Auflegen der Speicherleuchtstoffschicht (3) ausgestaltet ist.

## Claims

1. A drive apparatus (1) for an optical sampling device (5) having
- a threaded spindle (16) on which a spindle nut (23) is threaded, and
- a coupling means (24) for coupling the spindle nut (23) to the sampling device (5), the coupling means (24) guaranteeing cardanic coupling in the manner of a cardan joint.

2. The apparatus according to Claim 1, **characterised in that** the coupling means (24) has a connection piece (25), which is in particular discoidal, for connection to the sampling device (5) and at least one discoidal articulated plate (26, 27, 28) which is disposed between the spindle nut (23) and the connection piece (25), the spindle nut (23), the at least one articulated plate (26, 27, 28) and the connection piece (25) being disposed parallel to one another.

3. The apparatus according to Claim 2, **characterised in that** both between the spindle nut (23) and the at least one articulated plate (26, 27, 28) and between the at least one articulated plate (26, 27, 28) and the connection piece (25) two bearings (36, 37, 43, 44, 49, 50, 57, 58) lying diametrically opposite one another are provided by means of which the cardanic axes of rotation are formed.

4. The apparatus according to Claim 3, **characterised in that**
- in the surface (32) of the spindle nut (23) facing towards the at least one articulated plate (26, 27, 28) and in the surface (34) of the at least one articulated plate (26, 27, 28) facing towards the spindle nut (23) two diametrically opposed indentations (33, 35) are respectively provided, the indentations (33) in the surface (32) of the spindle nut (23) lying opposite those in the surface (35) of the at least one articulated plate (26, 27, 28) and balls being disposed between the opposite indentations (33, 35) of the spindle nut (23) and the at least one articulated plate (26, 27, 28), and
- in the surface (54) of the connection piece (25) facing towards the at least one articulated plate (26, 27, 28) and in the surface (51) of the at least one articulated plate (26, 27, 28) facing towards the connection piece (25) likewise two diametrically opposed indentations (52, 53, 55, 56) are respectively provided, the indentations (55, 56) in the surface of the connection piece (25) lying opposite the indentations (52, 53) in the surface (51) of the at least one articulated plate (26, 27, 28) and balls (57, 58) being disposed between the opposite indentations (52, 53, 55, 56) of the connection piece (25) and of the at least one articulated plate (26, 27, 28).

5. The apparatus according to Claim 4, **characterised in that** one of the four indentations of two opposite surfaces (32, 34, 38, 41, 45, 47, 51, 54) is in the form of an elongated indentation (40, 46, 53).

6. The apparatus according to any of Claims 2 to 5, **characterised in that** the spindle nut (23) and the connection piece (25) are connected to one another by a connection means (29) which is designed and positioned such that it holds the coupling means (24) together.

7. The apparatus according to Claim 6, **characterised in that** the connection means (29) has at least one spring, in particular a tension spring.

8. The apparatus according to any of the preceding claims, **characterised in that** the coupling means (24) is designed such that it guarantees cardanic coupling in the manner of a cardanic double joint.

9. The apparatus according to any of Claims 2 to 7 and Claim 8, **characterised in that** three parallel articulated plates (26, 27, 28) are provided which are arranged adjacent to one another and between the spindle nut (23) and the connection piece (25).

10. The apparatus according to any of the preceding claims, **characterised in that** the sampling device (5) is a device (2) for reading out X-ray information stored in a storage phosphor layer (3).

11. The apparatus according to Claim 10, **characterised in that** the connection piece (25) is designed for connection to a support (12) on which the storage phosphor layer (3) is laid.

## Revendications

1. Dispositif d'entraînement (1) pour un dispositif de balayage (5) optique, comportant
- une broche filetée (16) sur laquelle est enfilé un écrou de broche (23), et
- un dispositif d'accouplement (24) destiné à coupler l'écrou de broche (23) au dispositif de balayage (5), le dispositif d'accouplement (24) permettant un accouplement à la cardan à la manière d'un joint universel.

2. Dispositif selon la revendication 1, **caractérisé en ce que** le dispositif d'accouplement (24) présente un raccord (25) notamment en forme de disque, permettant son raccord au dispositif de balayage (5), et au moins une plaque d'articulation (26, 27, 28) en forme de disque qui est disposée entre l'écrou de broche (23) et le raccord (25) ; l'écrou de broche (23), l'au moins une plaque d'articulation (26, 27, 28) et le raccord (25) étant disposés parallèlement les uns aux autres.

3. Dispositif selon la revendication 2, **caractérisé en ce que** deux roulements (36, 37, 43, 44, 49, 50, 57, 58) diamétralement opposés sont présents entre l'écrou de broche (23) et l'au moins une plaque d'articulation (26, 27, 28) d'une part et entre l'au moins une plaque d'articulation (26, 27, 28) et le raccord (25) d'autre part, en formant des axes de rotation à la cardan.

4. Dispositif selon la revendication 3, **caractérisé en ce que**
- deux renfoncements diamétralement opposés (33, 35) sont respectivement prévus dans la surface (32) de l'écrou de broche (23) qui est tournée vers l'au moins une plaque d'articulation (26, 27, 28) et dans la surface (34) de l'au moins une plaque d'articulation (26, 27, 28) qui est tournée vers l'écrou de broche (23), les renfoncements (33) pratiqués dans la surface (32) de l'écrou de broche (23) étant en regard de ceux pratiqués dans la surface (35) de l'au moins une plaque d'articulation (26, 27, 28), et des billes (36, 37) étant disposées entre les renfoncements (33, 35) opposés de l'écrou de broche (23) et de l'au moins une plaque d'articulation (26, 27, 28), et
- deux renfoncements diamétralement opposés (52, 53, 55, 56) sont également respectivement prévus dans la surface (54) du raccord (25) qui est tournée vers l'au moins une plaque d'articulation (26, 27, 28) et dans la surface (51) de l'au moins une plaque d'articulation (26, 27, 28) qui est tournée vers le raccord (25), les renfoncements (55, 56) pratiqués dans la surface du raccord (25) étant en regard des renfoncements (52, 53) pratiqués dans la surface (51) de l'au moins une plaque d'articulation (26, 27, 28), et des billes (57, 58) étant disposées entre les renfoncements (52, 53, 55, 56) opposés du raccord (25) et de l'au moins une plaque d'articulation (26, 27, 28).

5. Dispositif selon la revendication 4, **caractérisé en ce que** l'un des quatre renfoncements de deux surfaces opposées (32, 34, 38, 41, 45, 47, 51, 54) est réalisé sous la forme d'un renfoncement allongé (40, 46, 53).

6. Dispositif selon l'une des revendications 2 à 5, **caractérisé en ce que** l'écrou de broche (23) et le raccord (25) sont reliés l'un à l'autre par un moyen de raccord (29) qui est conçu et disposé de sorte à solidariser le dispositif d'accouplement (24).

7. Dispositif selon la revendication 6, **caractérisé en ce que** le moyen de raccord (29) présente au moins un ressort, notamment un ressort de traction.

8. Dispositif selon l'une des revendications précédentes, **caractérisé en ce que** le dispositif d'accouplement (24) est conçu de sorte à permettre un accouplement à la cardan à la manière d'un joint homocinétique à la cardan.

9. Dispositif selon l'une des revendications 2 à 7 et la revendication 8, **caractérisé en ce qu'**il est prévu trois plaques d'articulation (26, 27, 28) parallèles disposées à proximité les unes des autres, entre l'écrou de broche (23) et le raccord (25).

10. Dispositif selon l'une des revendications précédentes, **caractérisé en ce que** le dispositif de balayage (5) consiste en un dispositif (2) permettant de lire des informations radiographiques enregistrées sur une couche d'enregistrement luminescente (3).

11. Dispositif selon la revendication 10, **caractérisé en ce que** le raccord (25) est conçu pour être relié à un support (12) destiné à supporter la couche d'enregistrement luminescente (3).
